# EUROPEAN PATENT APPLICATION

(11) **EP 3 410 749 A1**
(43) Date of publication of application: **05.12.2018**
(21) Application number: 17305652.4
(22) Date of filing: 02.06.2017
(51) Int. Cl.: H04W 4/00, H04W 4/22

(54) **NOTIFICATIONS AND BROADCASTING THROUGH SHORT RANGE ACCESS COMMUNICATIONS**

(71) Applicant: Thomson Licensing, 92130 Issy-les-Moulineaux (FR)
(72) Inventor: PARTHASARATHY, Shanmugasarathy, 600020 Chennai (IN); SRINIVASAN, Sreedevi, 600004 Chennai (IN); MS, Zameerun, 620008 Tiruchirappalli (IN)
(74) Representative: Vidon Brevets & Stratégie

(57) **Abstract**

A method and apparatus are described including detecting a notifiable event, generating a message including information about the notifiable event, scanning a local area to discover and identify at least one available short range access communication devices within a range of an alert device, generating a list of the discovered and identified short range access communication devices within the range of the alert device and transmitting a message to the at least one of the short range access communication devices regarding the detected notifiable event.

## Description

### FIELD

The present invention relates to broadcasting notifications using short range access communications such as Bluetooth, Zigbee and the like.

### BACKGROUND

This section is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

There has been dramatically increased availability of personal healthcare monitoring devices, such as Life Alert, Smart Watch, Smart Shoes, Smart Lens, head sets and sensors bundled with Smart Phones. It is possible to closely monitor vital health parameters and detect emergency health conditions, such as cardiac arrest, heavy bleeding from accidents and falls, seizures and fainting.

Lively 24/7 Emergency Medical Alert System (http://www.mylively.com/how-it-works) describes a system where whenever the "help" button is pressed (activated) the 24/7 team of trained live operators steps in to attempt to reach the monitored individual by phone, also calling the monitored individual's emergency contacts if unsuccessful in reaching the monitored individual. If all else fails then Lively 24/7 dispatches emergency services (responders). This system, however, does not use any short range access communications to reach the monitored individual, the monitored individual's emergency contacts or dispatch emergency service (responders).

Greatcall (https://www.greatcall.com/devices/lively-mobile-personal-emergency-alert-response) is an easy to use urgent response device. One button is pressed during an emergency situation. The pressing of the button notifies an emergency call center with location details of the emergency condition. Greatcall does not use short range access communications to notify the emergency call center.

WHEATS uses tiny wearable sensors to continuously collect a monitored individual's vital signs and Bluetooth devices to transmit the sensory data to a mobile phone, which can perform on-site data storage and process the collected data. After local storage, the mobile phone (used as local storage) can use its global system for mobile communications (GSM), WiFi and/or general packet radio service (GPRS) to periodically report the monitored individual's health status to a healthcare center via nearby a healthcare system by using wireless identity module (WIM) embedded in the subscriber identity module (SIM) card. WHEATS issues an alert emergency signals for medical aid once abnormal vital signs are detected. Assisted GPS (A-GPS) is used to track the exact location of the monitored individual's health status if/when the monitored individual's vital signs are abnormal or urgent (emergent). WHEATS reduces medical expense, data transmission and timely communication regarding emergency medical help. WHEATS, however, does not notify proximate people that may be able to render aid (assistance, help) while emergency responders are in route.

### SUMMARY

The proposed method and apparatus addresses notifications using short range access communications. The notifications may include such conditions as emergency health conditions, missing pets, alerts notifying area residents that a pedophile is in the area, Amber and Silver alerts etc. That is, while the proposed method and apparatus is described using emergency healthcare situations, the proposed method and apparatus is not so limited. In the situation where a person is alone and encounters an emergency health condition and nobody is close by to render aid/help, the proposed method and apparatus makes use of short range access communications such as Bluetooth, Zigbee, RF4CE, Zwave, Lora, Thread, NarrowBand-Internet of Things (NB-IOT) or 6LoWPAN and the like to transmit an alert or notification to other people (good Samaritans) in the area, as well as notifying an emergency call center (e.g., 911 center), to see if anyone else in the area can render assistance while emergency personnel are in route. ZigBee is an IEEE 802.15.4-based specification for a suite of high-level communication protocols used to create personal area networks with small, low-power digital radios. 6LoWPAN is an acronym for *IPv6 over Low power Wireless Personal Area Networks*. RF4CE is a ZigBee application profile. Thread is an Internet of Things (IoT) home automation protocol. NarrowBand IoT is a Low Power Wide Area Network (LPWAN) radio technology standard that has been developed to enable a wide range of devices and services to be connected using cellular telecommunications bands.

A method and apparatus are described including detecting a notifiable event, generating a message including information about the notifiable event, scanning a local area to discover and identify at least one available short range access communication devices within a range of an alert device, generating a list of the discovered and identified short range access communication devices within the range of the alert device and transmitting a message to the at least one of the short range access communication devices regarding the detected notifiable event.

### BRIEF DESCRIPTION OF THE DRAWINGS

The proposed method and apparatus is best understood from the following detailed description when read in conjunction with the accompanying drawings. The drawings include the following figures briefly described below:
Fig. 1 is a flowchart of an exemplary embodiment of the proposed method.
Fig. 2 is a block diagram of an exemplary embodiment of an alert device for practicing the proposed method.

It should be understood that the drawing(s) are for purposes of illustrating the concepts of the disclosure and is not necessarily the only possible configuration for illustrating the disclosure.

### DETAILED DESCRIPTION

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

The proposed method and apparatus addresses notifications using short range access communications. The notifications may include such conditions as emergency health conditions, missing pets, alerts notifying area residents that a pedophile is in the area, Amber and Silver alerts etc. That is, while the proposed method and apparatus is described using emergency healthcare (medical) situations, the proposed method and apparatus is not so limited.

In the event of an emergency health (medical) condition, the proposed method and apparatus (alert device) may produce an audible alert (such as a beeping sound), a call, a text message through a short message service (SMS), email, file transfer, plain data transfer, over the air message transfer and/or cloud services etc. to both an emergency call center or emergency contact person as well as notifications (alerts) to a person in the local area who might be able to render assistance. Also an in-place, remote monitoring system may detect the emergency condition through its normal monitoring, such as when there is no movement by the monitored individual (person) for a period of time. The remote monitoring system may depend on motion detectors, audio sensors and/or vibration sensors. Notifications (alerts) to an emergency call center or an emergency contact may take significant time to respond and speedy (quick) handling of the emergency condition (situation) may increase survival chances (rates). It is not that emergency responders are slow but, an alarm (alert, notification, call) is made (sounded, broadcast, transmitted, sent out) but the emergency responders, who may be volunteers especially in rural areas, need to make their way to the station to gain access to emergency vehicles and equipment before they can respond to the alert. Delays can decrease survival rates (chances).

Upon detection of a notifiable event (condition, situation), an alert device proximate to the monitored individual transmits the notification (alert) using short range access communications. A notifiable event may be an emergency medical (health) condition, such as bleeding from an injury, cardiac arrest, a seizure, fainting etc., related to a monitored individual or a notifiable event such as a missing pet, a Silver alert, an Amber alert, a pedophile in the area. An application (app) on the alert device assigns a name or renames the event and transmits notifications (alerts) of the event to devices held by people in the proximate area of the event. A text message or email notification (alert) may be, for example, "Emergency: Mr. XXX at YYY Main St. near you has just had a heart attack. Please urgently render assistance while emergency responders are in route." Such a notification (alert) is easily comprehended by a recipient. Since the sender's name and details are present, the recipient will not neglect (disregard) the notification (alert) perceiving the notification (alert) as anonymous and, therefore, bogus.

The short range access communications of the alert device of the person experiencing the emergency condition or having information about a notifiable event scans for nearby (proximate) devices able to receive notifications (alerts) over short range access communications. An application (app) on the alert device assigns a name to the event. Some short range access communications devices are required a pairing with proximate devices. If pairing is required then the short range access communications of the device of the person experiencing the emergency condition loops through proximate (nearby) devices one by one and performs the following actions with a timeout:
1. Transmit (send) a pairing request (if applicable)
2. Upon receiving acknowledgement of the pairing request, transmitting (sending) details of the notification (alert). The details may be through a file transfer.
Having a timeout helps to move through the list of devices proximate to the person experiencing the emergency condition or the alert device having information about a notifiable event without getting stuck with any single alert (notification) recipient, which increases the possibility to reach more proximate people through their devices. Upon completion of notification of all devices proximate to the person experiencing the emergency condition or the alert device having information about a notifiable event, the app rescans the devices proximate to the person experiencing the emergency condition or the alert device having information about a notifiable event to discover any new devices that may have entered the area proximate to the person experiencing the emergency condition or the alert device having information about a notifiable event. Any new devices that have entered the area proximate to the person experiencing the emergency condition or the alert device having information about a notifiable event are notified (alerted) in the manner described above. Multiple iterations of scanning and notification continue until help arrives at the scene of the notifiable event. If the discovered device is determined to be already paired, then re-pairing will not work. The device must be un-paired and then a new pairing request can be transmitted. It should be noted that some short range access communications devices may not require pairing. In the case where no pairing is required, this step is skipped.

The proposed method and apparatus reduces response time and thus, improves the possibility of speedy handling of notifiable events (conditions), whether the notifiable event (condition) is an emergency health condition, missing pet or an alert that a pedophile is in the proximate area. In the case of an emergency health condition, an Amber or Silver alert or an alert that a pedophile is in the proximate area may increase the chances of survival or prevent harm to a child (children) or an elder person. The proposed method and apparatus are not a substitute for aid rendered by emergency responders but the proposed method and apparatus is an attempt to alert people proximate to the person experiencing the emergency condition or the alert device having information about a notifiable event to render aid until emergency responders arrive.

Notifications (alerts) transmitted (sent) using short range access communications may include the following details:
1. Name, address
2. Emergency contact list
3. Event encountered, e.g., health condition, missing pet, pedophile in the area
4. GPS location, short range access communications beacon/WiFi location
5. Recommended response (aid, treatment)
6. Precautions (conditions of the event that the responder should be aware of)

To avoid adverse issues (effect) in the notifiable event that the closest short range access device is in the hands of, for example, a burglar or other unsavory character who is bent on taking advantage of a person who is impaired, preference is given to trusted/known devices by having such devices higher in the discover list. Traceability is incorporated as MAC/Host details of any unknown new devices that are approached are recorded and shared with emergency responders.

It is unlikely that any alerts (notifications) are transmitted to vehicles. The discovery/scanning process take a few seconds to complete and even if by chance the moving device is captured during the discovery/scanning, it is very unlikely that the moving device stays in the range until the next activity like pairing request/file transfer is initiated or transmitting information (data) about the notifiable event.

To avoid adverse issues (effect) in the event that the closest short range access communications device is in the hands of a minor and the minor attempts to investigate and is irreparably mentally harmed by the sight of the impaired patient, the notification (alert) to be transferred via short range access communications would include information about the present medical condition. The alert (notification) would also include a highlighted message insisting that the person proximate to the person having the emergency condition to check with the emergency contact while approaching the impaired patient (individual).

To avoid adverse issues (effect) in the event that the closest person is not familiar with health care/emergency response procedures and may end up doing more harm by moving the impaired person, the notification (alert) to be transferred via short range access communications would include information about present medical condition and recommended first aid for the present medical condition. The alert (notification) would also include a highlighted message insisting that the person proximate to the person having the emergency condition to check with the emergency contact while approaching the impaired patient (individual).

To avoid adverse issues (effect) in the event that the patient or responder has MRSA, HIV or HEP-C and attempted treatment could potentially infect others, the severe contagious disease of the impaired individual is included in the alert (notification) to caution the receiver of the alert. If the Contagious disease is deadly, then only the known devices shall be contacted. The alert (notification) would also include a highlighted message insisting that the person proximate to the person having the emergency condition to check with the emergency contact while approaching the impaired patient (individual).

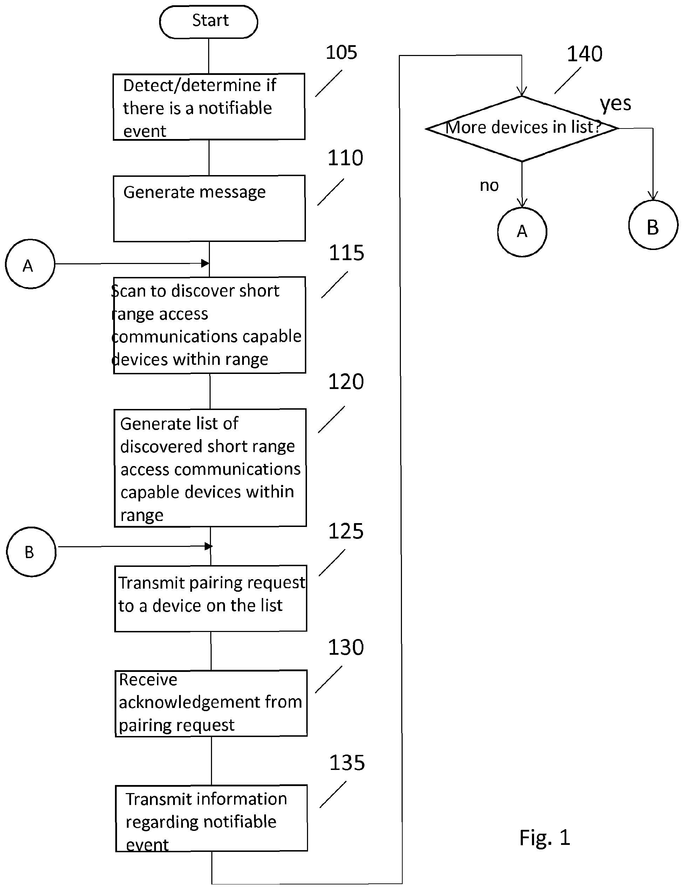

Fig. 1 is a flowchart of an exemplary embodiment of the proposed method. At 105, the alert device detects or determines if there is a notifiable event. The alert device may be a wearable health monitoring device or a device proximate to a wearable device or a device proximate to a person (monitored). Wearable health monitoring devices may or may not have sufficient storage (memory) or other components and may need to connect with another device (alert device) to store health data of the person being monitored. The alert device proximate to a (monitored) person may receive missing pet alerts, Amber alerts, Silver alerts or pedophile alerts. That is, alert devices may receive alerts and the alert device would then determine if the alert is a notifiable event.

At 110 the alert device generates a message including information about the notifiable event. The proposed method and apparatus is practiced in an alert device that determines if a notifiable event exists. In the event of a person experiencing an emergency condition, the alert device itself may detect (determine) the notifiable event. The alert device may be a wearable for sensing and/or recording vital signs. Alternatively, the alert device may be proximate to the person experiencing the emergency condition and be configured to receive signals from the wearable sensing device or other alerts and thus, determine that a notifiable event exists. If the notifiable event is a missing pet or a pedophile in the area or an Amber or Silver alert, then the alert device (wearable or proximate) may receive a signal regarding such alerts and determine if the alerts are notifiable events. The alert device (wearable or proximate) then generates a message regarding the notifiable event. For example, "Emergency: Mr. X at YYY Main St. near you has just suffered from a heart attack. Please proceed to YYY Main St. to render assistance while emergency responders are in route." or "Event: Mrs. Z at AAA Main St. near you has just reported that her pet (e.g., dog, cat) is missing. Her pet answers to Fluffy and is a schnauzer (tabby cat, etc.) Please advise Mrs. Z at 111-222-3333 if seen." or "Event: It has been reported that Mr. B, a pedophile, is in the area. Please ensure that any children are protected." or "Event: Amber Alert/Silver Alert in your area. Make and model of car and license plate. Please report sighting to 911." The information in the generated message may also include name of the notifiable event, the address of the notifiable event, the type of notifiable event, the GPS location/short range access communications beacon/WiFi location, recommended response (aid, treatment), make and model of vehicle and precautions (conditions of the event that the responder should be aware of).

At 115 the alert device scans the local area to discover and identify short range access communications devices within the range of the alert device and at 120 the alert device generates a list of the discovered short range access communications devices within the range of the alert device. At 125, the alert device transmits a pairing request to a device on the list of short range access communications devices within the range of the alert device. It should be noted that some short range access communications devices do not require pairing. In this case, the pairing request at 125 may be skipped. At 130, the alert device receives an acknowledgement from the pairing request. It should be noted that some short range access communications devices do not require pairing. In this case, since the pairing at 125 was skipped, the acknowledgement at 130 is skipped. If the short range access communications method used requires pairing then prior to transmitting the pairing request, the alert device name may be changed to a device friendly name in order to provide an indication of the criticality of the notifiable event. Based on the criticality of the event the receiver of the notifiable event may not ignore the subsequently transmitted information regarding the notifiable event. At 135, a message including information regarding the notifiable event is transmitted to the short range access communications devices within the range of the alert device.

At 140, a test is performed to determine if there are more devices on the list. If there are more devices on the list then the previous pairing is cancelled and processing proceeds to 125. It should be noted that some short range access communications devices do not require pairing. In this case, if there was no pairing then there needs to be no un-pairing or cancellation of any previous pairing. If there are no more devices in the list then processing proceeds to 115 to see if there are any new short range access communications devices within the range of the alert device that have entered the area (range) since the last scan was performed.

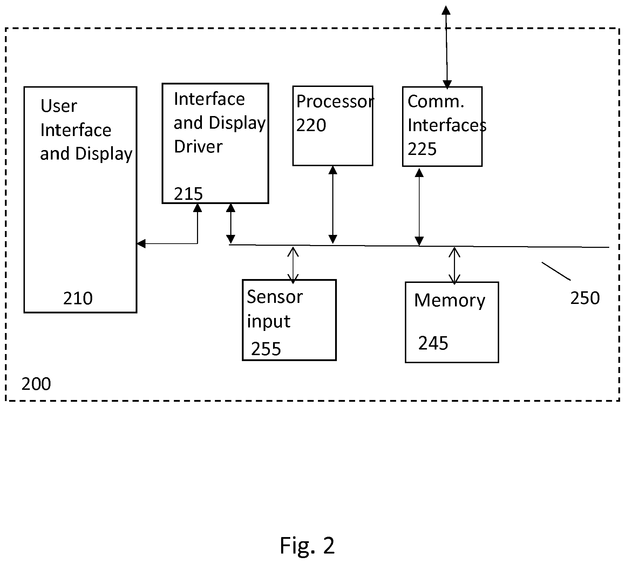

Fig. 2 is a block diagram of an exemplary embodiment of an alert device 200 for practicing the proposed method. The block diagram configuration includes a bus-oriented 250 configuration interconnecting a processor (processing unit) 220, and a memory 245. The configuration of Fig. 2 also includes a communication interface 225. The communication interface 225 may be wired or wireless and may in fact, include two interfaces - one for wired line communication and one for wireless communication. The wireless communications interface is for short range access communications. User interface and display 210 is driven by interface circuit 215. If the alert device 200 is a wearable health monitoring device then a sensor input module 255 may also be present. The sensor input module 255 is in communication with the remaining components (modules) in the alert device through the bus 250.

Processor 220 provides computation functions for the alert device, such as depicted in Fig. 1. The processor 220 can be any form of CPU or controller that utilizes communications between elements of the alert device to control communication and computation processes. Those of skill in the art recognize that bus 250 provides a communications path between the various elements of embodiment 200 and that other point-to-point interconnection options (e.g. non-bus architecture) are also feasible.

Any or all of the functionality included in the alert device may be embodied as application specific integrated circuits (ASICs), field programmable gate arrays (FPGAs), reduced instruction set computers (RISCs) or any other equivalent separate type of co-processor integrated into processor 220.

Memory 245 can act as a repository for memory related to any of the methods that incorporate the functionality of the alert device. Memory 245 can provide the repository for storage of information such as program memory, downloads, uploads, or scratchpad calculations. Those of skill in the art will recognize that memory 245 may be incorporated all or in part of processor 220. Communication interface 225 has both receiver and transmitter elements for communications especially for short range access communications as known to those of skill in the art. Program instructions for operation of the processor of the alert device may be in memory 245 or may be in processor.

It is to be understood that the proposed method and apparatus may be implemented in various forms of hardware, software, firmware, special purpose processors, or a combination thereof. Special purpose processors may include application specific integrated circuits (ASICs), reduced instruction set computers (RISCs) and/or field programmable gate arrays (FPGAs). Preferably, the proposed method and apparatus is implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

It is to be further understood that, because some of the constituent system components and method steps depicted in the accompanying figures are preferably implemented in software, the actual connections between the system components (or the process steps) may differ depending upon the manner in which the proposed method and apparatus is programmed. Given the teachings herein, one of ordinary skill in the related art will be able to contemplate these and similar implementations or configurations of the proposed method and apparatus.

For purposes of this application and the claims, using the exemplary phrase "**at least one** of A, B **and** C," the phrase means "only A, or only B, or only C, or any combination of A, B and C."

## Claims

1. A method, said method comprising:
detecting (105) a notifiable event;
generating (110) a message including information about said notifiable event;
scanning (115) a local area to discover and identify at least one available short range access communication devices within a range of an alert device;
generating (120) a list of said discovered and identified short range access communication devices within the range of the alert device; and
transmitting (135) a message to said at least one of the short range access communication devices regarding said detected notifiable event.

2. The method according to claim 1, further comprising:
transmitting (125) a pairing request, to said at least one identified short range access communications devices within the range of the alert device, if pairing is required by said at least one of the short range access communications devices; and
receiving (130) an acknowledgement of said pairing request.

3. The method according to claim 2, further comprising providing (125) an indication of said notifiable event in said pairing request.

4. The method according to any of claims 2 to 3, further comprising un-pairing (125)said discovered device if said discovered device required pairing and was previously paired and has not yet been un-paired.

5. An apparatus, comprising:
means for detecting a notifiable event;
means for scanning a local area to discover and identify of at least one available short range access communication devices within a range of an alert device;
means for generating a list of said discovered and identified short range access communication devices within the range of the alert device; and
means for transmitting a message to said at least one of the short range access communication devices regarding said detected notifiable event.

6. The apparatus according to claim 5, further comprising:
means for transmitting a pairing request, to said at least one identified short range access communication devices within the range of the alert device, if pairing is required by said at least one of the short range access communications devices; and
means for receiving an acknowledgement of said pairing request.

7. The apparatus according to claims 5 or 6, or the method according to any one of claims 1 to 4 wherein said information in said message about said notifiable event includes at least one of a name of said notifiable event, an address of said notifiable event, a type of said notifiable event, a recommended response to said notifiable event, a make and model of a vehicle involved in said notifiable event, precautions that should be used when addressing said notifiable event.

8. The apparatus according to any one of claims 5 to 7 or the method according to any one of claims 1 to 4 and 7, wherein said type of said notifiable event is one of an emergency medical condition, an Amber alert, a Silver alert, a pedophile alert and a missing pet alert.

9. The apparatus according to any of claims 6 to 8, further comprising means for providing an indication of said notifiable event in said pairing request.

10. The apparatus according to any of claims 5 to 9, or the method of any one of claims 1 to 4, 7 and 8, wherein said short range access communication devices includes devices operating using one of Bluetooth, Zigbee, Zwave, RF4CE, Lora, Thread, NarrowBand Internet of Things and 6LoWPAN.

11. The apparatus according to any of claims 5 to 10, or the method of any one of claims 1 to 4 and 7 to 10 wherein transmission of said message including said information is via at least one of an audio call, a text message via a short message service, an email, file transfer, plain data transfer, over the air message transfer and a cloud service.

12. The apparatus according to any of claims 5 to 11, or the method of any one of claims 1 to 4 and 7 to 11 wherein said transmission of said message about said notifiable event including said information includes a response timeout.

13. The apparatus according to any of claims 5 to 12, further comprising means for un-pairing said discovered device if said discovered device required pairing and was previously paired and has not yet been un-paired.

14. The apparatus according to any of claims 5 to 13, wherein said apparatus is an alert device.

15. A computer program product comprising instructions which when executed by a computer perform the method of any one of claims 1 to 4 and 7 to 8 and 10 to 12.
